**Europäisches Patentamt**

**European Patent Office**

**Office européen des brevets**

(19)

(11) Veröffentlichungsnummer: **0 130 348**
A2

(12) # EUROPÄISCHE PATENTANMELDUNG

(21) Anmeldenummer: **84105925.6**

(22) Anmeldetag: **24.05.84**

(51) Int. Cl.⁴: **A 23 G 1/20,** A 23 G 1/21, A 23 G 1/22

(30) Priorität: **31.05.83 DE 3319687**

(43) Veröffentlichungstag der Anmeldung: **09.01.85** Patentblatt 85/2

(84) Benannte Vertragsstaaten: **AT BE CH DE FR GB IT LI LU NL SE**

(71) Anmelder: **Gebr. Bindler Maschinenfabrik GmbH & Co. KG, Kölner Strasse 102-106, D-5275 Bergneustadt/Rhld.1 (DE)**

(72) Erfinder: **Schlegel, Dipl.-Ing., Gerhart-Hauptmann-Strasse 24, D-5270 Gummersbach 31 (DE)**

(74) Vertreter: **Meyer, Alfred, Dipl.-Ing. Dr. jur., Schwanenmarkt 10, D-4000 Düsseldorf 1 (DE)**

(54) **Verfahren zum Herstellen geformter essbarer Artikel, insbesondere von Schokoladenwaren-Artikeln, sowie Vorrichtung zur Durchführung des Verfahrens.**

(57) Die Erfindung betrifft ein Verfahren zum Herstellen geformter eßbarer Artikel, insbesondere von Schokoladenwaren-Artikeln, sowie eine Vorrichtung zur Durchführung dieses Verfahrens. Erfindungsgemäß lassen sich insbesondere auch bei der Herstellung von Artikeln in Form eines Hohlprofils eine überaus gleichmäßige Wandungsstärke und damit auch die Einhaltung des jeweils gewünschten Gewichtes erreichen, wenn das Rohmaterial in feine Teilchen zerkleinert und mittels einer von einem elektrischen Feld ausgehenden elektrostatischen Kraftwirkung in die Form eingebracht wird und wenn anschließend die zum Schmelzen des Rohmaterials erforderliche Wärme zugeführt wird. Das elektrostatische Feld kann hierbei zwischen mit Gleichspannung beaufschlagten Elektroden verlaufen. Es kann aber auch eine Kunststofform durch Reibung elektrostatisch aufgeladen werden.

Verfahren zum Herstellen geformter eßbarer Artikel, insbesondere von Schokoladenwaren-Artikeln, sowie

Vorrichtung zur Durchführung des Verfahrens

Die Erfindung betrifft ein Verfahren zum Herstellen geformter eßbarer Artikel, insbesondere von Schokoladenwaren-Artikeln, bei dem durch Wärmezufuhr schmelzbares Rohmaterial in eine Form eingegeben und in dieser verfestigt wird. Die Erfindung betrifft ferner eine zur Durchführung dieses Verfahrens geeignete Vorrichtung.

Es ist beispielsweise bei der Herstellung von Schoko-ladenwaren-Artikeln bekannt, geschmolzene Schokoladen-masse in Formen zu gießen und erstarren zu lassen. Nach der Erstarrung hat der in der Form befindliche Artikel eine ebene und flächige Oberseite. Der Artikel besteht über seinen ganzen Querschnittsbereich hin aus Schokoladenmasse.

Wenn demgegenüber Formteile hergestellt werden sollen, die einem Halbprofil entsprechen und von denen jeweils zwei zu einem Hohlkörper zusammengesetzt werden können, wird die mit flüssiger Schokoladenmasse gefüllt Form gewendet, sobald der mit der Formwandung unmittelbar in Berührung kommende Bereich der Schokoladenmasse so weitgehend verfestigt ist, daß er beim Wenden der Form in dieser verbleibt. Der noch flüssige mittlere Bereich der Schokoladenmasse läuft beim Wenden aus der Form heraus.

Die auf diese Weise hergestellten Hohlkörper haben den
Nachteil, daß ihre Wandstärke weitgehend ungleichmäßig ist, denn das Auskippen der noch flüssigen
Schokoladenmasse läßt das Vorgeben einer bestimmten
Wandungsstärke und das Einhalten des jeweils vorgegebenen Wertes nicht zu. Dies ist nachteilig, da unter
anderem auch die Stabilität des Hohlkörpers von der
Wandungsstärke abhängig ist. Auch ist es vielfach erforderlich, daß die Artikel ein vorgegebenes Gewicht
haben. Dieses läßt sich ebenfalls nicht genau einhalten.

Die Erfindung hat sich deshalb die Aufgabe gestellt,
ein Verfahren zum Herstellen geformter eßbarer Artikel
sowie eine Vorrichtung zur Durchführung dieses Verfahrens vorzuschlagen und die Herstellung von Artikeln mit
wesentlich gleichmäßigerer Wandungsstärke und unter
möglichst genauer Einhaltung des vorgegebenen Gewichtes
zu gewährleisten.

Das zur Lösung dieser Aufgabe von der Erfindung vorgeschlagene Verfahren ist dadurch gekennzeichnet, daß das
Rohmaterial in feine Teilchen zerkleinert und mittels
einer von einem elektrischen Feld ausgehenden elektrostatischen Kraftwirkung in die Form eingebracht wird
und daß anschließend die zum Schmelzen des Rohmaterials
erforderliche Wärme zugeführt wird.

Gemäß der der Erfindung zugrundeliegenden Erkenntnis
ist ein elektrostatisches Feld durchaus geeignet, das
in feine Teilchen zerkleinerte Rohmaterial in überaus
gleichmäßiger Verteilung in die Form einzubringen und
in dieser so lange festzuhalten, bis die Teilchen aufgrund der Wärmezufuhr miteinander verschmelzen und eine
einheitliche Materialschicht bilden. Vorgegebene Abmessungen und Gewichte lassen sich verhältnismäßig genau
einhalten. Man kann beispielsweise die Menge des in
jede Form einzugebenden Rohmaterials genau portionieren,

- 3 -

bevor das Rohmaterial der Einwirkung des elektrostatischen Feldes ausgesetzt wird, oder man kann auch diejenige Zeit entsprechend steuern, während der das Rohmaterial unter dem Einfluß des elektrostatischen Feldes in die Form eingegeben wird. Das von der Erfindung vorgeschlagene Verfahren ist grundsätzlich für die Herstellung beliebig geformter Artikel anwendbar. Das Verfahren bringt ganz besondere Vorteile jedoch bei der Herstellung von Artikeln, die die Form eines Hohlprofils haben. Es kommt hinzu, daß jeweils nur diejenige Menge an Rohmaterial erwärmt zu werden braucht, die sich in der Form befindet, während bisher ein wesentlicher Anteil der zugeführten Wärmeenergie auch zur Erwärmung des Überschußmaterials erforderlich war, das beim Wenden der Form aus dieser entfernt wurde. Hierdurch ergab sich ein nicht unbeachtlicher Energieverlust.

Für die Durchführung des vorgeschlagenen Verfahrens ist es erfindungsgemäß besonders vorteilhaft, wenn die Form vor dem Eingeben des Rohmaterials in eine solche Lage gebracht wird, daß die obere Eingabeseite nach unten weist, und daß das Rohmaterial von unten in die Form eingegeben wird. Hierdurch läßt sich eine besonders gute Gleichmäßigkeit bei der Eingabe des Rohmaterials erreichen. Das elektrostatische Feld kann ohne Schwierigkeiten so stark bemessen werden, daß es die auf die feinen Rohmaterial-Teilchen einwirkende Schwerkraft überwindet. Ferner kann es erfindungsgemäß günstig sein, wenn die Form und das Rohmaterial beim Eingeben desselben in senkrechter Richtung aufeinander zu bewegt werden. Eine derartige Bewegung ermöglicht die jeweils gewünschte Beeinflussung des Eingabevorganges. Mit der Verringerung des Abstandes zwischen der Form und dem Rohmaterial vergrößert sich die Eingabegeschwindigkeit beziehungsweise -menge.

Vorteilhaft ist es ferner, wenn auch die Wärmezufuhr von unten her erfolgt, so daß die Wärme unmittelbar zu-

- 4 -

nächst in das Rohmaterial übergehen kann, bevor sie zu einer Erwärmung der Form beiträgt. Wenn das Rohmaterial in ausreichendem Maße geschmolzen ist, kann ein erster Teil der Kühlung vorteilhaft bereits erfolgen, während sich die Form noch in dieser Lage befindet.

Das elektrostatische Feld kann beispielsweise mit Hilfe zweier elektrischer Elektroden erzeugt werden, die mit einer Gleichspannung beaufschlagt sind. Die Elektroden können hierbei so ausgebildet werden, daß das elektrostatische Feld einen ausreichend großen Flächenbereich erfaßt und einen möglichst homogenen Verlauf hat. Es ist aber auch denkbar, bei der Verwendung von Kunststoffformen so vorzugehen, daß die Form durch Reibung elektrostatisch aufgeladen wird. Eine zur Durchführung des vorgeschlagenen Verfahrens geeignete Vorrichtung kann zu diesem Zweck einen oder mehrere relativ zur Form bewegliche Reibkörper haben, die die elektrostatische Aufladung durch Reibung an der Form erzeugen. Als Reibkörper kann beispielsweise ein angetriebener endloser Gurt oder ein sich drehender Bürstensatz dienen.

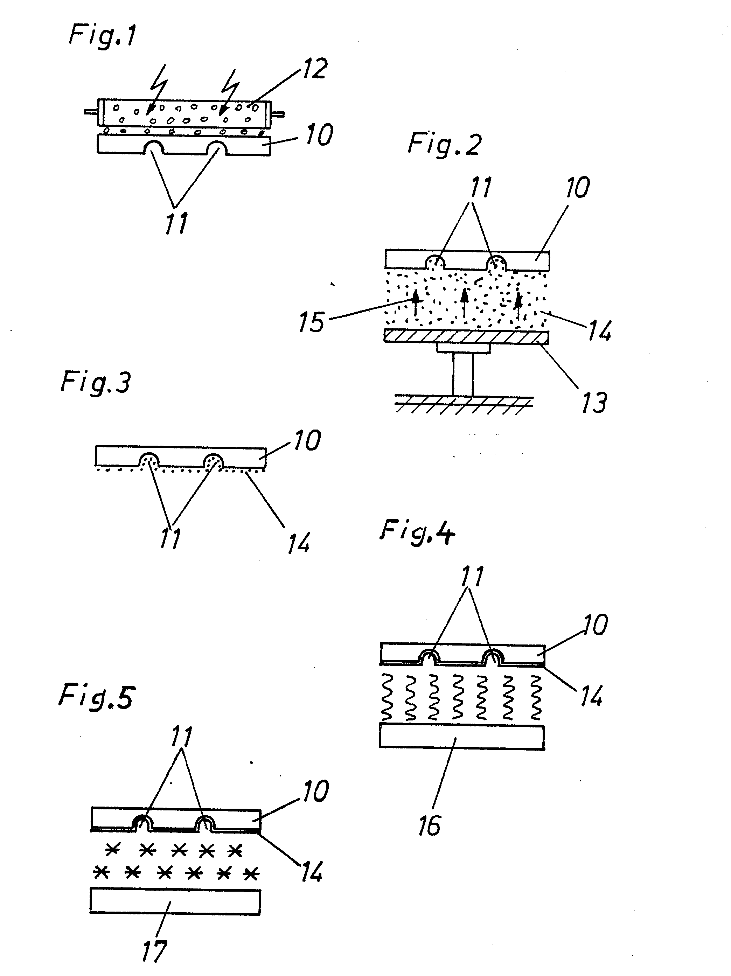

Die sich aus dem vorgeschlagenen Verfahren ergebende Arbeitsweise wird nachfolgend anhand einer Zeichnung näher beschrieben, deren Figuren 1 bis 5 in der ent-sprechenden Reihenfolge die wichtigsten Verfahrens-schritte symbolisch andeuten.

Eine mit der Bezugsziffer 10 bezeichnete Form ist in einer hier nicht dargestellten Maschinenanlage so gehalten, daß ihre mit Vertiefungen 11 versehen Seite nach unten weist. Die Form 10 ist aus einem geeigneten Kunststoffmaterial hergestellt, das durch sich drehende Bürsten 12 elektrostatisch aufgeladen wird (Figur 1).

Auf einer hier nur schematisch angedeuteten Transportvorrichtung 13 befinden sich fein zerkleinerte Schokoladenteilchen 14. Diese werden durch den Einfluß des elektrostatischen Feldes von der Form 10 angezogen. Um einen
gleichmäßigen Beginn des Eingebens über die ganze Fläche
der Form 10 hin zu erreichen, kann die Transportvorrichtung 13 von der Form 10 zunächst einen so großen Abstand
haben, daß das elektrostatische Feld noch nicht wirksam
ist. Durch Veränderung des Abstandes zwischen der Form 10
und der Transportvorrichtung 13 in der durch die Pfeile 15
gekennzeichneten Richtung kann das elektrostatische Feld
zur Wirkung gebracht werden. Die Unterseite der Form 10
erhält eine Beschichtung aus den Schokoladenteilchen 14,
wie sie in Figur 3 dargestellt ist.

Wenn das elektrostatische Feld durch die zuvor bereits
erwähnten Elektroden erzeugt wird, ist es zweckmäßig,
zunächst die Form 10 und die Transportvorrichtung 13 in
die in Figur 2 dargestellte Lage zu bringen und dann die
Gleichspannung einzuschalten.

Anschließend wird, wie in Figur 4 dargestellt, eine Heizvorrichtung 16 eingeschaltet, nachdem zuvor die Transportvorrichtung 13 entfernt oder aber die Form 10 über die
Heizvorrichtung 16 transportiert worden ist. Die Schokoladenteilchen 14 werden zunächst noch immer durch die elektrostatische Aufladung der Form 10 gehalten. Wenn die Schokoladenteilchen 14 miteinander verschmolzen sind und eine
einheitliche Materialschicht von gleichmäßiger Stärke
bilden, wird die Heizvorrichtung 16 entfernt oder abgeschaltet. Wie in Figur 5 angedeutet, schließt jetzt ein
Kühlvorgang an. Zu diesem Zweck wird eine Kühlvorrichtung
17 verwendet, die unter die Form 10 gebracht wird und aus
der Kühlluft von geeigneter Temperatur austritt. Nach
vollständiger Verfestigung des hergestellten Formteils wird
dieses aus der Form 10 entfernt.

# Dipl.-Ing. Dr. jur. Alfred W. Meyer
## Patentanwalt

Zugelassener Vertreter beim Europäischen Patentamt

D 4600 Düsseldorf 1
Schwanenmarkt 10
Telefon: (02 11) 32 60 80
Telegramme: Meypat
Telex: 8 58 2282 mypa d

---

Mein Zeichen:  6518 A 45 Eu

Aktenzeichen:

Anmelder:   Gebr. Bindler
Maschinenfabrik GmbH & Co.KG
Kölner Straße 102-106
5275 Bergneustadt


## A n s p r ü c h e :

1. Verfahren zum Herstellen geformter eßbarer Artikel,
insbesondere von Schokoladenwaren-Artikeln, bei dem durch
Wärmezufuhr schmelzbares Rohmaterial in eine Form eingegeben und in dieser Form verfestigt wird, dadurch gekennzeichnet, daß das Rohmaterial in feine Teilchen
zerkleinert und mittels einer von einem elektrischen
Feld ausgehenden elektrostatischen Kraftwirkung in die
Form eingebracht wird und daß anschließend die zum
Schmelzen des Rohmaterials erforderliche Wärme zugeführt wird.

2. Verfahren nach Anspruch 1, dadurch gekennzeichnet, daß
die Form vor dem Eingeben des Rohmaterials in eine
solche Lage gebracht wird, daß die obere Eingabeseite
nach unten weist, und daß das Rohmaterial von unten
in die Form eingegeben wird.

3. Verfahren nach Anspruch 2, dadurch gekennzeichnet, daß
die Form und das Rohmaterial beim Eingeben desselben in
senkrechter Richtung auf einander zu bewegt werden.

4. Verfahren nach Anspruch 2 oder 3, dadurch gekennzeichnet, daß die Wärmezufuhr von unten erfolgt.

5. Verfahren nach einem der Ansprüche 2 bis 4, dadurch gekennzeichnet, daß zumindest ein erster Teil der Kühlung erfolgt, während sich die Form in dieser Lage befindet.

6. Verfahren nach einem der vorherigen Ansprüche unter Verwendung einer Form aus Kunststoff, dadurch gekennzeichnet, daß die Form durch Reibung elektrostatisch aufgeladen wird.

7. Vorrichtung zum Durchführen des Verfahrens nach einem oder mehreren der vorherigen Ansprüche, dadurch gekennzeichnet, daß eine Form (10) innerhalb eines elektrostatischen Feldes angeordnet ist.

8. Vorrichtung nach Anspruch 7, dadurch gekennzeichnet, daß einer oder mehrere relativ zu der Form (10) bewegliche und die Form (10) berührende Reibkörper (12) vorgesehen sind.

9. Vorrichtung nach Anspruch 7 oder 8, dadurch gekennzeichnet, daß die Form (10) mit nach unten weisender Eingabeseite über einem Vorrat von in feine Teilchen zerkleinertem Rohmaterial (14) angeordnet ist.

*Fig.1*

*Fig.2*

*Fig.3*

*Fig.4*

*Fig.5*